# EUROPÄISCHE PATENTSCHRIFT

(11) **EP 0 691 249 B1**
(45) Veröffentlichungstag und Bekanntmachung des Hinweises auf die Patenterteilung: **15.09.1999**
(21) Anmeldenummer: 95109080.2
(22) Anmeldetag: 13.06.1995
(51) Int. Cl.: B60S 1/58, B60S 1/08

(54) **Verfahren zum Betreiben eines Heckscheibenwischers eines Kraftfahrzeugs und Vorrichtung zur Durchführung des Verfahrens**
Method of operating the rear windscreen wiper of a motor vehicle and device for carrying out the method
Procédé d'entraînement pour l'essuie-glace de lunette arrière de véhicule automobile et appareil pour la mise en oeuvre de ce procédé

(30) Priorität: 07.07.1994 DE 4423954
(43) Veröffentlichungstag der Anmeldung: 10.01.1996
(73) Patentinhaber: ROBERT BOSCH GMBH, 70442 Stuttgart (DE)
(72) Erfinder: Grass, Ansgar, D-77652 Offenburg-Windschlag (DE)

(56) Entgegenhaltungen:
- DE-A- 3 811 453
- FR-A- 2 310 905
- FR-A- 2 510 057
- Bedienungsanleitung Volvo 850, Seite 1:11

## Beschreibung

Die Erfindung geht aus von einem Verfahren zum Betreiben eines Heckscheibenwischers eines Kraftfahrzeugs und einer Vorrichtung zur Durchführung des Verfahrens nach der Gattung der unabhängigen Ansprüche. Aus der Bedienungsanleitung Volvo 850, Seite 1:11 ist die Steuerung einer Heckscheibenwischanlage beschrieben, wonach beim Einrücken eines Lenkstockschalters als Bedienelement der Wischanlage Scheibenwischer und Waschvorrichtung gemeinsam eingeschaltet werden. Beim Loslassen des Lenkstockschalters ist vorgesehen, daß der Heckscheibenwischer noch zwei oder drei Wischzyklen nachläuft. Dieser relativ lange Nachlauf ist insbesondere bei kurzzeitiger Wisch-Waschbetätigung unnötig lang und führt auf trockener Scheibe zu einem verstärkten Verschleiß des Wischgummis.

Ferner ist es bei einer Heckscheibenwischanlage bekannt, mit einem Lenkstockschalter beispielsweise die Vorgaben eines Dauerwischens, eines Wisch-Waschens sowie eines Intervallwischens zu ermöglichen. Aus Kostengründen werden die beiden Funktionen Intervallwischen und Heckwaschen sowie die Waschwasserpumpe auf einen gemeinsamen Schaltkontakt des Lenkstockschalters gelegt. Die Waschwasserpumpe wird demnach auch beim Ein- und Ausschalten des Intervallbetriebs kurzzeitig aktiviert. In Abhängigkeit von dem in Wasserschlauch vorhandenen Wasser sowie von der Aktivierungszeit fördert die Waschwasserpumpe das Waschwasser auf die Heckscheibe. Befindet sich beim Ausschalten des Intervallbetriebs der Wischarm im Rücklauf zu einer Parklage, so wird das Waschtwasser neben dem Wischarm auf die Heckscheibe gefördert. Nach dem Erreichen der Parklage bleibt der Wischarm stehen, weil der Intervallwischbetrieb ausgeschaltet wurde. Das geförderte Waschwasser verläuft nun auf der kurz zuvor trockengewischten Heckscheibe.

Der Erfindung liegt die Aufgabe zugrunde, ein Verfahren zum Betreiben eines Heckscheibenwischers eines Kraftfahrzeugs und eine Vorrichtung zur Durchführung des Verfahrens anzugeben, die die genannten Nachteile vermeiden.

Die Aufgabe wird durch die in den unabhängigen Ansprüchen angegebenen Merkmale jeweils gelöst.

### Vorteile der Erfindung

Das erfindungsgemäße Verfahren zum Betreiben eines Heckscheibenwischers eines Kraftfahrzeugs weist den Vorteil auf, daß mit einfachen Mitteln ein ausreichendes Trockenwischen der Heckscheibe trotz einer Mehrfachbelegung eines Bedienelements, bei der gleichzeitig Wisch- und Waschfunktionen ausgelöst werden, möglich ist. Erfindungsgemäß ist vorgesehen, daß nach dem Abschalten des Heckscheibenwischers durch das Bedienelement zunächst das Erreichen der Parklage des Wischarms mittels eines Parklagesignals erfaßt wird und daß damit ein weiterer Wischzyklus, ausgehend von einer Parklage des Wischarms bis zum erneuten Erreichen einer Parklage ausgelöst wird.

Mit diesen Maßnahmen ist es möglich, den weiteren Wischzyklus unabhängig davon auszulösen, ob sich während des Abschaltens der Wischarm gerade in der Packlage oder auf dem Weg dorthin befindet.

Die erfindungsgemäße Vorrichtung zur Durchführung des Verfahrens weist den Vorteil auf, daß teilweise bereits vorhandene Mittel verwendet werden können, um die neuen Funktionen zu realisieren. Vorgesehen ist eine signalverarbeitende Anordnung, der ein von einem Parklagensensor abgegebenes Parklagensignal sowie das von dem Bedienelement abgegebene Schaltsignal zugeführt sind.

Die signalverarbeitende Anordnung enthält Speichermittel zum Hinterlegen eines Abschaltsignals sowie eine UND-Verknüpfung, der das gespeicherte Abschaltsignal und das Parklagensignal zugeführt sind. Wird in der UND-Verknüpfung festgestellt, daß ein gespeichertes Abschaltsignal vorhanden ist, und daß das Parklagensignal gleichzeitig aufgetreten ist, dann erzeugt die signalverarbeitende Anordnung ein Einschaltsignal für den Heckscheibenwischerantrieb für einen weiteren Wischzyklus.

Eine besonders vorteilhafte Maßnahme sieht vor, daß die signalverarbeitende Anordnung in den Heckscheibenwischerantrieb integriert ist. Zusätzliche Leitungen zu den bereits heute vorhandenen Leitungen sind mit dieser Maßnahme vermeidbar.

Als Parklagensensor ist eine herkömmliche Kontaktscheibe geeignet, die in der Massenproduktion besonders preiswert herstellbar ist und ihre Zuverlässigkeit bewiesen hat.

Weitere vorteilhafte Weiterbildungen und Ausgestaltungen sowohl des erfindungsgemäßen Verfahrens als auch der erfindungsgemäßen Vorrichtung zur Durchführung des Verfahrens ergeben sich jeweils aus den weiteren abhängigen Ansprüchen und aus der folgenden Beschreibung.

### Zeichnung

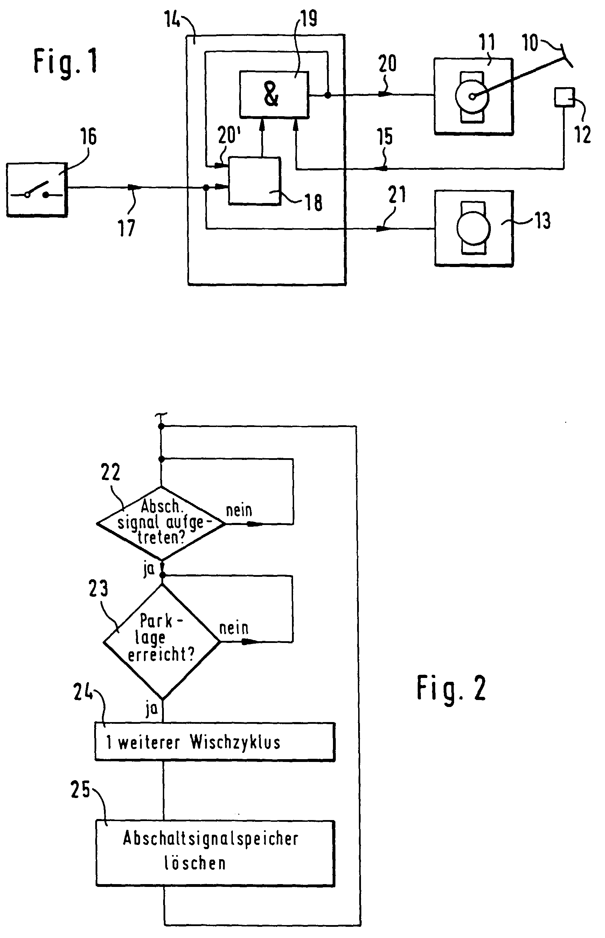

Figur 1 zeigt ein Blockschaltbild einer erfindungsgemäßen Vorrichtung und Figur 2 zeigt Flußdiagramm eines erfindungsgemäßen Verfahrens zum Betreiben eines Heckscheibenwischers eines Kraftfahrzeugs.

Figur 1 zeigt einen Wischarm 10 als Bestandteil eines Heckscheibenwischers, der weiterhin einen Heckscheibenwischerantrieb 11, einen Parklagensensor 12 sowie eine Waschwasserpumpe 13 enthält. Der Heckscheibenwischerantrieb 11 wird von einer signalverarbeitenden Anordnung 14 gesteuert, der ein vom Parklagensensor 12 abgegebenes Parklagensignal 15 sowie ein von einem Bedienelement 16 abgegebenes Schaltsignal 17 zugeführt sind.

Die signalverarbeitende Anordnung 14 enthält einen Abschaltsignalspeicher 18 sowie eine UND-Verknüpfung 19. Die signalverarbeitende Anordnung 14 erzeugt ein erstes als Einschaltsignal dienendes Steuersignal 20 für den Heckscheibenwischerantrieb 11, das gleichzeitig ein Löschsignal 20' ist, welches dem Abschaltsignalspeicher 18 zugeleitet wird. Weiterhin stellt die signalverarbeitende Anordnung 14 ein zweites Steuersignal 21 für die Waschwasserpumpe 13 bereit, das vorzugsweise identisch ist mit dem Schaltsignal 17. Die in Figur 1 gezeigte Verbindung innerhalb der signalverarbeitenden Anordnung 14 kann entsprechend ohne Änderungen auch außerhalb liegen.

Das erfindungsgemäße Verfahren zum Betreiben eines Heckscheibenwischers eines Kraftfahrzeugs wird anhand des in Figur 2 gezeigten Flußdiagramms eines Verfahrens näher erläutert:

Das in Figur 1 gezeigte Blockschaltbild eines Heckscheibenwischers eines Kraftfahrzeugs zeigt nur die für die Durchführung des erfindungsgemäßen Verfahrens erforderlichen Teile. Diejenigen Teile, die zum Betreiben des Heckscheibenwischers gemäß dem eingangs angegebenen Stand der Technik erforderlich sind, enthält Figur 1 dagegen nicht. Beispielsweise kann das Bedienelement 16, das vorzugsweise als Lenkstockschalter in einem Kraftfahrzeug ausgebildet ist, mehrere Schaltkontakte enthalten, die sowohl ein Bereitstellen des ersten Steuersignals 20 für den Heckscheibenwischerantrieb 11 sowie ein Bereitstellen des zweiten Steuersignals 21 für die Waschwasserpumpe 13 auslösen. Insbesondere kann mit dem Bedienelement 16 im allgemeinen ein Intervallbetrieb des Heckscheibenwischerantriebs 11 ausgelöst werden. Sofern zusätzliche elektronische Funktionen, beispielsweise der Intervallbetrieb zu realisieren sind, können die dafür erforderlichen Teile ohne weiteres in der signalverarbeitenden Anordnung 14 enthalten sein. Eine einfache Unterbringung der zusätzlichen Funktionen in der signalverarbeitenden Anordnung 14 ist insbesondere möglich, wenn die UND-Verknüpfung 19 sowie gegebenenfalls der Abschaltsignalspeicher 18 in einem Mikroprozessor realisiert sind, der problemlos weitere Aufgaben wahrnehmen kann.

Für die Erfindung wesentlich ist das Erkennen des Schaltsignals 17 in der Bedeutung eines Abschaltsignals. Während der Betätigung des Bedienelements 16, bei der eine Bedienperson beispielsweise einen Intervallbetrieb des Heckscheibenwischers ein- oder ausschaltet, wird bei bekannten Anlagen gleichzeitig das zweite Steuersignal 21 für die Waschwasserpumpe 13 bereitgestellt. Befindet sich nun beim Abschalten der Wischarm 10 gerade in seiner Parklage oder auf dem Weg dorthin, kann der Fall auftreten, daß das von der Waschwasserpumpe geförderte Waschwasser auf den bereits gewischten Teil der Heckscheibe trifft. Das erfindungsgemäße Verfahren sieht vor, daß nach dem Auftreten des Schaltsignals 17, das einem Abschalten entspricht, der Wischarm 10 einen weiteren Wischzyklus, ausgehend von einer Parklage bis zum erneuten Erreichen einer Parklage durchführt.

In einem ersten Schritt des Verfahrens, dessen Flußdiagramm in Figur 2 gezeigt ist, wird deshalb in einer erster Abfrage 22 festgestellt, ob das Schaltsignal 17 mit der Bedeutung eines Abschaltens aufgetreten ist. Falls dies nicht der Fall ist, wird zur ersten Abfrage 22 zurückgegangen. Falls doch, wird in einem zweiten Verfahrensschritt zur zweiten Abfrage 23 weitergegangen. Das Auftreten des Schaltsignals 17 mit der Bedeutung des Abschaltens wird im Abschaltsignalspeicher 18 festgehalten. In der zweiten Abfrage 23 wird gestgestellt, ob der Wischarm 10 eine Parklage erreicht hat. Beim Erreichen der Parklage gebt der Parklagensensor 12 das Parklagensignal 15 an die signalverarbeitende Anordnung 14 ab. Falls auch die zweite Abfrage 23 mit Ja zu beantworten ist, wird in einer Anweisung 24 durch Bereitstellen des ersten Steuersignals 20 für den Heckscheibenwischerantrieb 11 ein weiterer Wischzyklus des Wischarms 10 ausgelöst. Das Erfüllen der beiden Abfragen 22, 23 kann mit der in der signalverarbeitenden Anordnung 14 enthaltenen UND-Verknüpfung 19 festgestellt werden, die das erste Steuersignal 20 bereitstellt. Identisch mit dem ersten Steuersignal 20 ist das Löschsignal 20', das den Abschaltsignalspeicher 18 löscht. Dieser Schritt ist in Figur 2 als zweite Zuweisung 25 bezeichnet. Bei der in Figur 1 gezeigten Realisierung, bei der das erste Steuersignal 20 identisch ist mit dem Löschsignal 20', werden die erste und zweite Zuweisung 24, 25 gleichzeitig ausgeführt. Anschließend kehrt das Verfahren zurück zur ersten Abfrage 22.

Der Parklagensensor 12 ist beispielsweise als herkömmliche Kontaktscheibe realisiert, bei der neben der Parklage gegebenenfalls weitere Positionen des Wischarms 10 erfaßt werden können. Geeignet als Parklagensensor 12 ist weiterhin ein Mikroschalter. Besonders geeignet sind weiterhin Parklagensensoren, die einen Permanentmagneten sowie ein magnetfeldempfindliches Element, beispielsweise ein Hallelement enthalten.

Die erfindungsgemäße Vorrichtung zur Durchführung des erfindungsgemäßen Verfahrens ist insbesondere einfach realisierbar, wenn die signalverarbeitende Anordnung 14 im Heckscheibenwischerantrieb 11 integriert ist. Eine Führung des Parklagensignals 15 durch das gesamte Kraftfahrzeug kann mit dieser Maßnahme vermieden werden.

Das erfindungsgemäße Verfahren sowie die erfindungsgemäße Vorrichtung zur Durchführung des Verfahrens sind auch geeignet für eine Heckscheibenwischanlage, bei der der Wischarm 10 mehr als eine Parklage aufweist. Beispielsweise können zwei Parklagen vorgesehen sein, die jeweils am Ende des Wischbereichs liegen. Der zusätzliche Wischzyklus ist dann derart zu verstehen, daß er, ausgehend von der einen Parklage, beim Erreichen der anderen Parklage endet.

## Patentansprüche

1. Verfahren zum Betreiben einer Heckscheibenwischvorrichtung eines Kraftfahrzeugs mit einem Bedienelement (16) insbesondere in einem Lenkstockschalter eines Kraftfahrzeugs, wobei vom Bedienelement zumindest in einer von mehreren Betätigungsstellungen mit dem Einschalten des Heckscheibenwischers (10) auch ein Steuersignal (21) für eine Heckscheiben-Waschwasser-Pumpe (13) erzeugt und einer signalverarbeitenden Anordnung (14) zugeführt wird, dadurch gekennzeichnet, daß nach dem Abschalten des Heckscheibenwischers (10) durch das Bedienelement (16) zunächst das Erreichen der Parklage des Heckscheibenwischers (10) mittels eines Parklagesignals (15) erfaßt wird und daß damit ein weiterer Wischzyklus, ausgehend von der Parklage bis zum erneuten Erreichen der Parklage ausgelöst wird.

2. Verfahren nach Anspruch 1, dadurch gekennzeichnet, daß beim Ein- oder Ausschalten des Intervallbetriebs des Heckscheibenwischers (10) die Waschwasserpumpe (13) kurzzeitig durch das Steuersignal (21) aktiviert wird und daß nach dem Abschalten des Intervallbetriebs zunächst das Erreichen der Parklage festgestellt und anschließend ein weiterer Wischzyklus ausgelöst wird.

3. Vorrichtung zur Durchführung des Verfahrens nach Anspruch 1 oder 2 mit einem Bedienelement (16) und einer signalverarbeitenden Anordnung (14), dadurch gekennzeichnet, daß ein von einem Parklagensensor (12) abgegebenes Parklagensignal (15) und ein von dem Bedienelement (16) abgegebenes Schaltsignal (17) zugeführt sind, daß ein Abschaltsignalspeicher (18) vorgesehen ist zum Hinterlegen des Schaltsignals (17), mit der Bedeutung eines Abschaltens, daß eine UND-Verknüpfung (19) vorgesehen ist, der der Inhalt Abschaltsignalspeichers (18) und das Parklagensignal (15) zugeführt sind, und daß die signalverarbeitende Anordnung (14) bei einem gespeicherten Abschaltsignal und bei einem Auftreten des Parklagensignals (15) ein Einschaltsignal (20) für einen Wischzyklus des Heckscheibenwischerantriebs (11) bereitstellt.

4. Vorrichtung nach Anspruch 3, dadurch gekennzeichnet, daß der Parklagensensor (12) als Kontaktscheibe realisiert ist.

5. Vorrichtung nach Anspruch 3, dadurch gekennzeichnet, daß der Parklagensensor (12) als magnetischer Sensor realisiert ist, der einen Permanentmagneten enthält, der mit einem magnetfeldempfindlichen Element zusammenwirkt.

6. Vorrichtung nach Anspruch 3, dadurch gekennzeichnet, daß als Parklagensensor (12) ein Mikroschalter vorgesehen ist.

7. Vorrichtung nach Anspruch 3, dadurch gekennzeichnet, daß die signalverarbeitende Anordnung (14) im Heckscheibenwischerantrieb (11) integriert ist.

8. Vorrichtung nach Anspruch 3, dadurch gekennzeichnet, daß das Bedienelement (16) in einem Lenkstockschalter des Kraftfahrzeugs angeordnet ist, daß das Bedienelement (16) mehrere Schaltfunktionen beim Betätigen gleichzeitig auslöst, wobei eine der Schaltfunktionen das Bereitstellen eines Steuersignals (21) für eine Waschwasserpumpe (13) ist.

## Claims

1. Method of operating a rear windscreen wiper of a motor vehicle having a control (16), in particular in a steering column switch of a motor vehicle, a control signal (21) for a rear windscreen washing water pump (13) also being generated by the control at least in one of a plurality of activation positions when the rear windscreen wiper (10) is switched on, and being fed to a signal-processing arrangement (14), characterized in that after the rear windscreen wiper (10) is switched off by the control (16), firstly the fact that the rear windscreen wiper (10) has reached the home position is sensed by means of a home position signal (15), and in that a further wiping cycle starting from the home position towards the home position being reached again is triggered thereby.

2. Method according to Claim 1, characterized in that when the interval mode of the rear windscreen wiper (10) is switched on or off, the washing water pump (13) is briefly activated by the control signal (21), and in that, after the interval mode is switched off, firstly the fact that the home position has been reached is determined and then a further wiping cycle is triggered.

3. Device for carrying out the method according to Claim 1 or 2, having a control (16) and a signal-processing arrangement (14), characterized in that a home position signal (15) which is emitted by a home position sensor (12) and a switching signal (17) which is emitted by the control (16) are fed in, in that a switching-off signal memory (18) is provided for storing the switching signal (17), signifying switching off, in that an AND logic operator (19), to which the contents of the switching-off signal memory (18) and the home position signal (15) are fed, is provided, and in that, when there is a stored switching-off signal and when the home position signal (15) occurs, a switching-on signal (20) is made available for a wiping cycle of the rear windscreen drive (11).

4. Device according to Claim 3, characterized in that the home position sensor (12) is implemented as a contact plate.

5. Device according to Claim 3, characterized in that the home position sensor (12) is implemented as a magnetic sensor which contains a permanent magnet which interacts with an element which is sensitive to magnetic fields.

6. Device according to Claim 3, characterized in that a microswitch is provided as home position sensor (12).

7. Device according to Claim 3, characterized in that the signal-processing arrangement (14) is integrated in the rear windscreen drive (11).

8. Device according to Claim 3, characterized in that the control (16) is arranged in a steering column switch of the motor vehicle, in that the control (16) triggers a plurality of switching functions simultaneously when it is activated, one of the switching functions being to make available a control signal (21) for a washing water pump (13).

## Revendications

1. Procédé servant à faire fonctionner un dispositif d'essuyage de la vitre arrière d'un véhicule à moteur avec un élément de manoeuvre (16) en particulier dans un commutateur fixé sur la colonne de direction, un signal de commande (21) étant aussi produit pour une pompe d'eau de lavage (13) de vitre arrière par l'élément de commande au moins dans l'une de plusieurs positions d'actionnement avec la mise en marche de l'essuie-glace de vitre arrière (10), et étant amené à un dispositif de retraitement de signaux (14),
caractérisé en ce que
• après le débranchement de l'essuie-glace (10) de la vitre arrière par l'élément de commande (16) on détecte tout d'abords l'arrivée de l'essuie-glace de la vitre arrière à sa position de repos au moyen d'un signal de position de repos (15) et
• de cette façon on déclenche un autre un autre cycle d'essuyage, en partant de la position de repos jusqu'à ce qu'ait été atteinte à nouveau la position de repos.

2. Procédé selon la revendication 1,
caractérisé en ce que
• lors de la mise en marche ou de l'arrêt du fonctionnement intermittent de l'essuie-glace (10) de la vitre arrière la pompe (13) de l'eau de lavage est brièvement actionnée par le signal de commande (21) et
• près le débranchement du fonctionnement intermittent on détermine tout d'abord l'arrivée à la position de repos et ensuite on déclenche un autre cycle d'essuyage.

3. Dispositif pour la mise en oeuvre du procédé selon la revendication 1 ou 2, avec un élément de commande (16) et un système de retraitement de signaux (14), caractérisé en ce que
• on amène un signal de position de repos (15) délivré par un détecteur de position de repos (12) et un signal de commande (17) délivré par l'élément de manoeuvre (16),
• on prévoit une mémoire des signaux de débranchement (18) pour retenir le signal de commande (17), avec la signification d'un débranchement, en ce qu'
• on prévoit une combinaison ET (19), à laquelle sont amenés le contenu de la mémoire des signaux de débranchement (18) et le signal des positions de repos (15), et
• le dispositif de retraitement des signaux (14) fournit dans le cas d'un signal de débranchement mis en mémoire et lors de la survenance du signal de position de repos (15) un signal de mise en marche (20) pour un cycle d'essuyage du mécanisme d'entraînement (11) de l'essuie-glace de la vitre arrière.

4. Dispositif selon la revendication 3,
caractérisé en ce que
le détecteur de position de repos (12) est réalisé sous la forme d'un disque de contact.

5. Dispositif selon la revendication 3,
caractérisé en ce que
le détecteur de position de repos (12) est réalisé sous la forme d'un détecteur magnétique qui contient un aimant permanent qui coopère avec un élément sensible aux champs magnétiques.

6. Dispositif selon la revendication 3,
caractérisé en ce qu'
on prévoit comme détecteur de positions de repos (12) un micro-interrupteur.

7. Dispositif selon la revendication 3,
caractérisé en ce que
le dispositif de retraitement de signaux (14) est intégré dans le mécanisme d'entraînement (11) de l'essuie-glace de la vitre arrière.

8. Dispositif selon la revendication 3,
caractérisé en ce que
• l'élément de manoeuvre (16) est disposé dans un commutateur monté sur la colonne de direction du véhicule à moteur,
• l'élément de manoeuvre (16) déclenche en même temps plusieurs fonctions de commande lors de l'actionnement, l'une des fonctions de commande étant la préparation d'un signal de commande (21) pour une pompe (13) d'eau de lavage.
